(19) Europäisches Patentamt
European Patent Office
Office européen des brevets

(11) Publication number: **0 014 599**
**B1**

(12) **EUROPEAN PATENT SPECIFICATION**

(45) Date of publication of patent specification: **04.06.86**

(51) Int. Cl.$^4$: **C 07 F 7/08,** C 07 F 7/18, C 08 G 77/38 // C08G59/40, H01B3/46

(21) Application number: **80300418.3**

(22) Date of filing: **13.02.80**

(54) **Process for the production of silicones.**

(30) Priority: **13.02.79 US 11901**

(43) Date of publication of application: **20.08.80 Bulletin 80/17**

(45) Publication of the grant of the patent: **04.06.86 Bulletin 86/23**

(84) Designated Contracting States: **AT BE CH DE FR GB IT NL SE**

(56) References cited:
**FR-A-2 178 218**
**FR-A-2 245 663**
**GB-A-1 054 041**
**GB-A-1 062 418**
**US-A-2 783 262**
**US-A-2 863 898**
**US-A-4 139 547**

**The file contains technical information submitted after the application was filed and not included in this specification**

(73) Proprietor: **M & T CHEMICALS, INC.**
**One Woodbridge Center**
**Woodbridge, New Jersey 07095 (US)**

(72) Inventor: **Berger, Abe**
**11 Malvern Drive**
**Summit, New Jersey 07901 (US)**

(74) Representative: **Ellis, John Clifford Holgate et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 014 599 B1**

**Description**

The present invention relates to a process for the production of silicones containing aromatic residues. The invention is a development of the invention disclosed in our United States Specification 4,139,547.

At least some of the novel silicones obtainable by the process of this invention are suitable for making silicone containing polymer materials employed as wire coatings, as passivation and/or protective coatings for semi-conductor devices, and for curing epoxy resins.

The electrical industry is always seeking suitable coating material which will improve the physical and/or electrical properties of electrical articles to which it is applied. The material when cured must also be easily repairable when required and only a small amount of material be applied to the article to achieve the desirable electrical and chemical properties. Suitable coating materials may include a copolymer which when cured can be the reaction product of a silicon-free organic diamine, and organic tetracarboxylic dianhydride and a polysiloxane diamine. Any improvements in electrical and physical properties of coating materials which can be achieved by improving the process of making one or more of the ingredients is most desired by industry.

The chemical industry is always looking for chemical intermediates for making improved copolymers of silicones with other organic materials and curing catalysts for epoxy resins, urethanes and the like.

British Patent Specification 1,062,418 teaches new nitrogen-containing siloxanes having an aminofunctional R group of the following general formula

$$ArO—C_aH_{2a}—Si$$

wherein Ar is an aminoaryl, nitroaryl, amino-nitroaryl, or amidoaryl radical, and a is a positive integer.

The said British specification further teaches that two of the remaining valency bonds in the above given formula may be occupied by halogen, alkyl, aryl, aralkyl, alkaryl, alkoxy, aryloxy, or a group or groups obtained from aryloxyalkylsiloxyl group, the remaining bond being occupied by an organosiloxaryl or substituted organosiloxaryl group.

However, it is known in the silicone art that halogen containing silanes will spontaneously condense with either a primary or a secondary amino group to produce silicon-nitrogen bonds as silazanes or silylarylamines and amine hydrochlorides, including the materials which fit the above general formula of the said British specification.

The process of GB—A—1 062 418 involves reacting a sodium salt of a suitably substituted phenol or naphthol and a haloalkyl siloxane. In the numbered examples, the reaction was performed using ethanol as a solvent and, although a chloroalkyl siloxane was used in one example for the reaction with a nitro-substituted phenol, an iodoalkyl siloxane was more frequently employed and was always used when an amino-substituted phenol was the other reactant.

The process taught in the said British specification may be subject to several inherent drawbacks should one wish to employ the process commercially. Some of these drawbacks include (1) the yields of the process are insufficient to be commercially feasible, (2) iodoalkyl silanes are expensive and are not commercially available, (3) pressure reactions are potentially hazardous and should be avoided when possible, (4) hydrazine is a highly toxic and corrosive material to handle in any quantity, and (5) the solvents employed have low flash points.

It is an object of this invention to provide a new and improved process for making functional group containing siloxanes.

The process of this invention also provides new and improved functional group containing silicones at least some of which will be suitable for use in making wire coatings, junction and/or protective coating materials for semi-conductor devices, and for curing epoxy resins.

According to the invention there is provided a process for making a silicone compound having the general formula

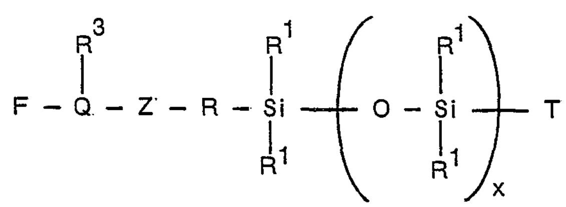

(XIII)

wherein Q is an aromatic nucleus, Z is —S—,

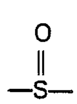

.

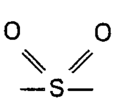

or —O—, R is a bivalent group, each $R^1$ is chosen from monovalent hydrocarbon radicals and any one $R^1$ may be the same as or different from another $R^1$, $R^3$ is hydrogen or a hydrocarbon radical or a functional

group or atom, x is 0 or an integer of 1 or more, F is a functional group or atom, with the proviso that neither F nor $R^3$ is primary amino when Z is other than —O—, and T is a group chosen from alkoxy, aryloxy or other substituted or unsubstituted oxyhydrocarbyl radical and a group having the general formula

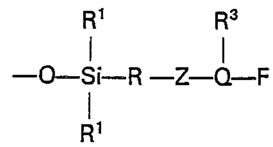

wherein Q, Z, R, $R^1$, $R^3$ and F are as defined above and any one R may be the same as or different from the other R and one $R^3$ may be different from the other $R^3$ comprising the steps of

(a) preparing an anhydrous solution in a dipolar aprotic organic solvent of an alkaline salt of a compound having the general formula

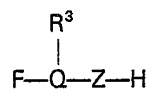

where F, Q, $R^3$ and Z have the meanings given above

(b) at a temperature within a predetermined temperature range adding a compound having the general formula

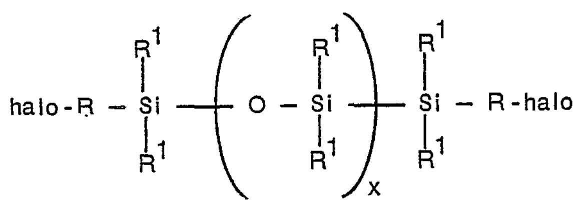

or the general formula

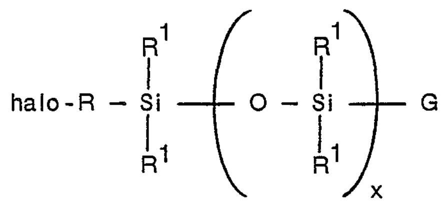

wherein halo denotes chlorine or bromine, G denotes alkoxy or aryloxy or other substituted or unsubstituted oxyhydrocarbyl radical, and the other symbols are as defined above while maintaining the temperature within the predetermined range, and

(c) recovering the silicone compound.

In the above process, step (a) may be performed by mixing the said compound $FQR^3ZH$ and an aqueous alkaline organic solvent mixture containing a dipolar aprotic solvent, bringing the resultant mixture to reflux temperature, maintaining it at that temperature whilst constantly agitating the reaction mixture and removing the water. Preferably the aqueous alkali is aqueous sodium hydroxide or other alkali metal hydroxide and preferably the organic solvent comprises a mixture of toluene and dimethyl sulphoxide. The compound specified in step (b) is preferably chosen from an alkoxy dimethylhalopropylsilane, an alkoxy dimethylhalobutyl silane, a 1,3-bis(halopropyl)tetramethyldisiloxane and a 1,3-bis(halobutyl)tetramethyldisiloxane.

The resultant silicone may have the general formula

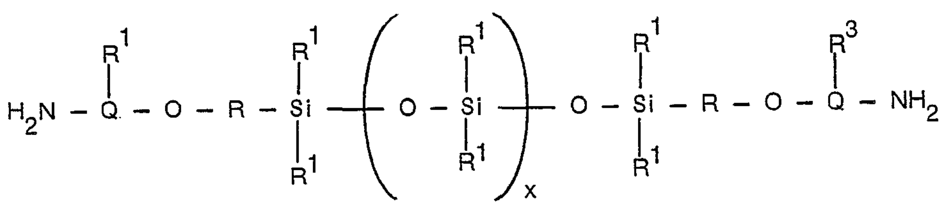

(I)

wherein Q, R, $R^1$ and x are as defined above. Such amines (I) are especially suitable for making polymers

with improved physical properties for electrical wires and protective and/or junction coatings for semi-conductor materials. When Z is

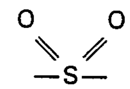

this will impart excellent thermal stability as well as excellent anti-oxidant properties to polymers made from the amine.

When T is an alkoxy group and x is O, the end product is a monoalkoxy capped silane. When T is an aryloxy group and x is O, the end product is a monoaryloxy capped silane.

When T is of the group having the general formula as defined in formula (XIII), the end product is a disiloxane when x is O and a product ranging from an oligomeric functional capped polysiloxane to a high molecular weight functionally capped polysiloxane when x is a positive integer of 1 or greater.

The silicones having the general formula (XIII) as defined above in which F is secondary amino (not being acylamino), carboalkoxy or formyl are novel compounds.

The following examples are illustrative of the teachings of the making of amines of the above general formula (I):

Example I

Silicone Containing Ether Aromatic Amine

A 3-necked flask is charged with 43.28 parts of 50% aqueous sodium hydroxide solution, 112 parts dimethyl sulphoxide (DMSO), 120 parts toluene and 59.95 parts p-aminophenol. The reaction is brought to reflux in a nitrogen atmosphere with rapid agitation. The water of the charged ingredients (the aqueous hydroxide solution) and the water formed during the neutralization reaction is removed azeotropically and collected in a Dean Stark trap. The refluxing solvent is returned to the reaction mixture. The pot temperature, that is the temperature of the reaction mixture, climbs from an initial 110°C to about 180°C during a period of from 7 to 8 hours of stirring. At the end of this time period water is no longer evolved from the reaction mixture.

The reaction mixture is then cooled to about 80°C. At this temperature of about 80°C, 86.6 parts of bis-(chlorobutyl)tetramethyldisiloxane is added dropwise to the reaction mixture. The chemical reaction which occurs during the dropwise addition is slightly exothermic. Therefore, the addition is controlled to retain the reaction temperature at about 80°C. Upon completion of the disiloxane addition, the reaction is allowed to proceed at about 80°C for a period which is usually overnight.

The reaction is monitored such, for example, as by use of a GC analytical means. When GC analysis indicates a new peak having a long retention time is maximized, the reaction is complete.

The reaction mixture is filtered and the solvents, toluene and DMSO, are removed under a reduced pressure of about 13.3 mbar (10 mm of mercury). The stripped mixture is distilled and the desired end product is recovered at a temperature of from about 295°C to about 300°C at from 0.5 mm to about 2 mm pressure of mercury. The chemical structure may be confirmed by suitable chemical analysis means such as IR on NMR. The structure of the recovered new amine has the chemical name bis-(p-aminophenoxybutyl)tetramethyldisiloxane.

The recovered product solidified to a white solid upon standing and had a melting point of from 48°C to 49°C.

The yield was about 83 percent.

Example II

Silicone Containing Ether Aromatic Amine

The process of Example I is followed except that 59.95 parts of m-aminophenol is substituted for the p-aminophenol and 78.9 parts of bis-(chloropropyl)tetramethyldisiloxane is substituted for the bis-(chlorobutyl)tetramethyldisiloxane. The end product is recovered at a temperature within a range of from 245°C to 260°C at from 0.67 to 2.67 mbar (0.5 mm to 2.0 mm of mercury). The recovered product is identified as bis-(m-aminophenoxypropyl)tetramethyldisiloxane. The recovered product material is a pale yellow liquid which does not solidify upon standing in the cold at 0°C for 3 days. Its purity, as determined by titration with perchloric acid, is better than 99%.

The amines obtained by the process of this invention having the general formula (I) as hereinbefore defined are especially suitable for making a copolymer material which is the product of the condensation reaction of an organic diamine with one of these amines and molar amounts of an organic dianhydride and having a general formula which is one selected from

(a) (II) 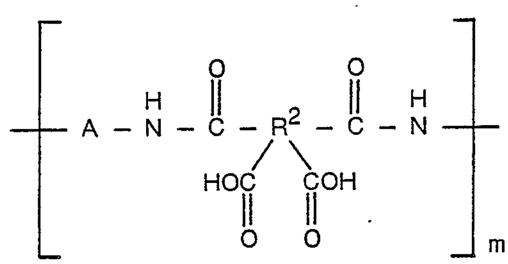

with from 0 to 99 mol percent intercondensed structure units of the general formula:

(III) 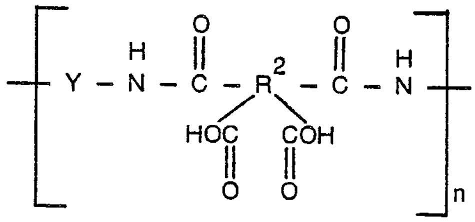 ;

(b) (IV) 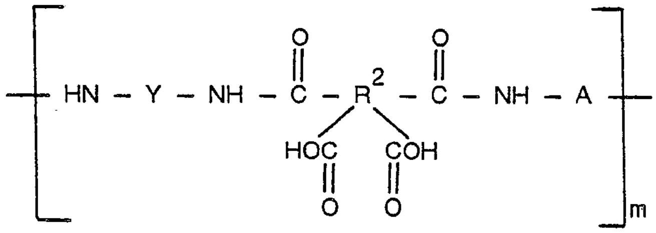 ;

(c) (V) 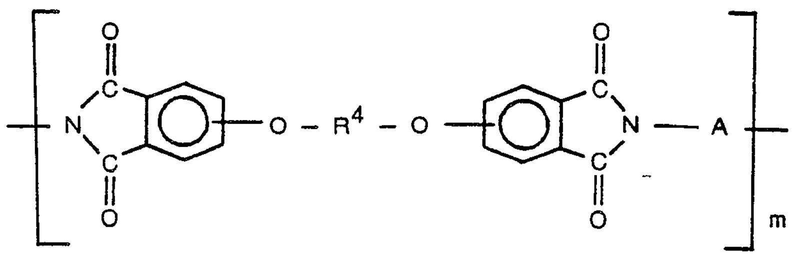 and

with from 0 to 99 mol percent intercondensed structure units of the general formula:

(VI) 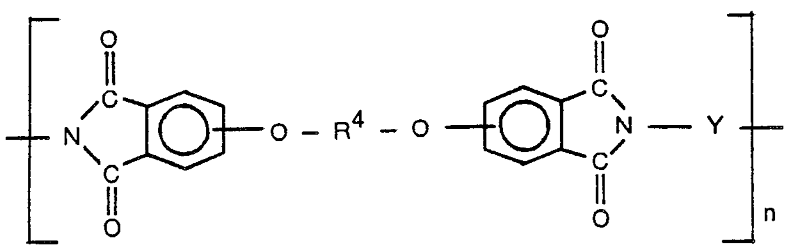 , and

(d) (VII) 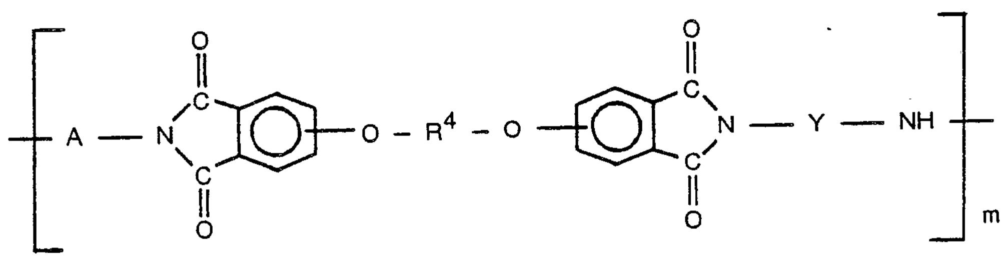

wherein A is an aromatic amine having the general formula (I) as hereinbefore defined; $R^2$ is a tetravalent radical; m and n are the same or different integers greater than 1 and preferably from 10 to 10,000 or more; Y is a divalent silicon-free organic radical which is the residue of an organic diamine or a macrocyclic crown ether, and $R^4$ is a member selected from (1) a divalent organic radical and (2) divalent organic radicals of the general formula:

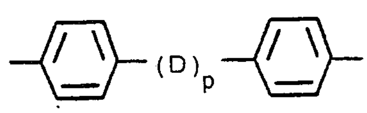

wherein D is a member selected from divalent radicals of the formulae:

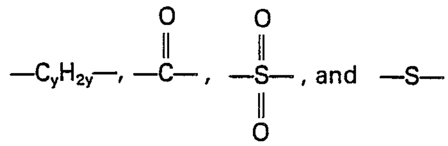

p is 0 or 1,

y is 0 or a whole number from 1 to 5, and the divalent bonds of the $—O—R^4—O—$ radicals are equally situated on the phthalic anhydride end group, for example, in the 3,3'-positions or the 4,4'-positions.

The divalent organic radicals of (1) for $R^4$ of formula (V) may be any of the following:

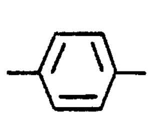 , 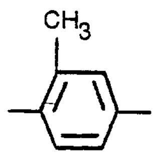 , 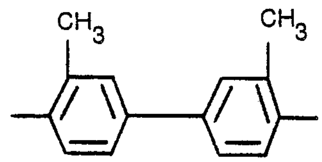 ;

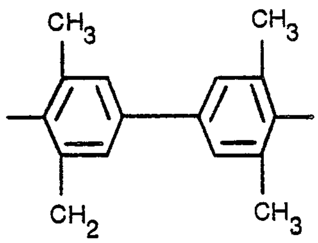 ; 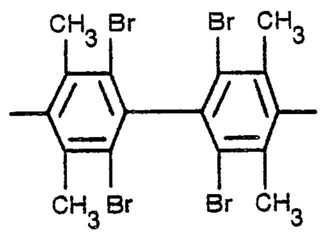 , and

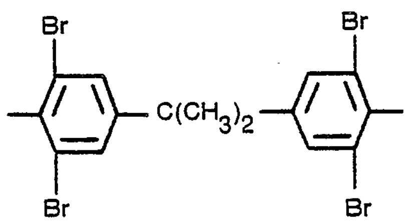 .

The above-mentioned block and random copolymer materials can be prepared by effecting reaction, in the appropriate molar proportions, of a mixture of ingredients comprising a silicone bis-(ether aromatic amine), the structure of which is found in Formula (I) and a silicon-free diamino compound of the general formula:

(VIII) $$NH_2—Y—NH_2$$

with molar amounts of dianhydride of the general formula:

(IX) 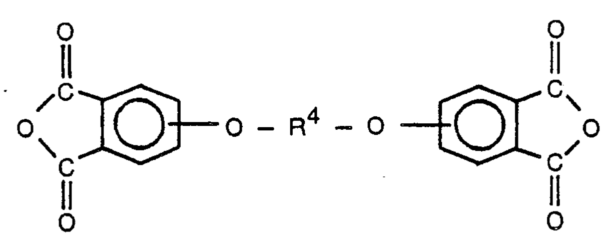

wherein $R^4$ and Y have the meanings as given before.

Other organic tetracarboxylic dianhydrides containing no ether linkages can be added in an amount up to about 50%, by molar requirements, of the total anhydride requirements of the reaction system with the

diamino functional compounds. For example, the mixture of ingredients may include a second tetracarboxylic dianhydride having the formula

(X)

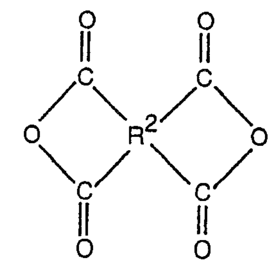

wherein $R^2$ has the meaning previously recited herein. Films resulting from the incorporation of the optional addition of a second ether-free dianhydride are more solvent resistant and more stable to attack by alkali, amines or hydrazine reagents. Thus the reaction product may additionally contain up to 50 mol percent of recurring structural units of the general formula:

(XI)

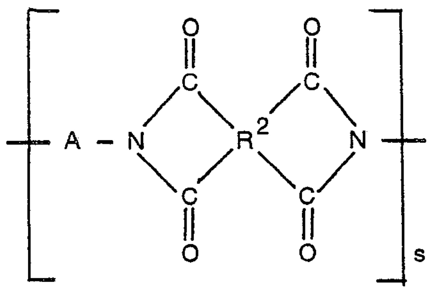

with 1 to 99 mol percent intercondensed structural units of the formula:

(XII)

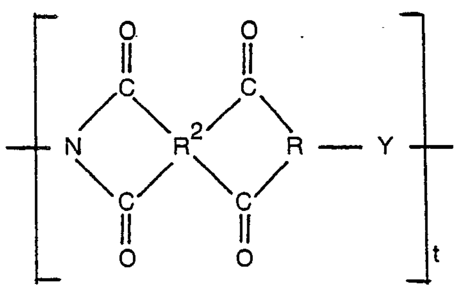

wherein R, $R^2$ and Y have the meanings as given before, and s and t are the same or different integers greater than 1 and preferably from 10 to 10,000 or more.

The diamines of Formula (VIII) are described in the prior art and are to a large extent commercially available materials. Typical of such diamines from which the prepolymer may be prepared are the following:

m-phenylenediamine;
p-phenylenediamine;
4,4'-diaminodiphenylpropane;
4,4'-diaminodiphenylmethane (hereinafter referred to as "methylenedianiline");
4,4'-diaminodiphenyl sulphide;
4,4'-diaminodiphenyl sulphone;
4,4'-diaminodiphenyl ether;
1,5-diaminophthalene;
3,3'-dimethylbenzidine;
3,3'-dimethoxybenzidine;
2,4-bis(ß-amino-t-butyl)toluene;
bis(p-ß-amino-t-butyl)phenyl ether;
bis(p-ß-methyl-o-aminopentyl)benzene;
1,3-diamino-4-isopropylbenzene;
1,2-bis(3-aminopropoxy)ethane;
m-xylylenediamine;

p-xylylenediamine;
bis(4-aminocyclophexyl)methane;
decamethylenediamine;
3-methylheptamethylenediamine;
4,4-dimethylheptamethylenediamine;
2,11-dodecanediamine;
2,2-dimethylpropylenediamine;
octamethylenediamine;
3-methoxyhexamethylenediamine;
2,5-dimethylhexamethylenediamine;
2,5-dimethylheptamethylenediamine;
3-methylheptamethylenediamine;
5-methylnonamethylenediamine;
1,4-cyclohexanediamine;
1,12-octadecanediamine;
bis(3-aminopropyl)sulphide
N-methyl-bis(3-aminopropyl)amine;
hexamethylenediamine;
heptamethylenediamine;
nonamethylenediamine;

and or a mixture of one or more thereof. It should be noted that these diamines are given merely for the purpose of illustration and are not considered to be all inclusive. Other diamines not mentioned will readily be apparent to those skilled in the art.

The aromatic bis(ether anhydride) of Formula (IX) may include the following:
2,2-bis[4-(3,4-dicarboxyphenoxy)phenyl]propane dianhydride;
2,2-bis[4-(2,3-dicarboxyphenoxy)phenyl] propane dianhydride;
4,4'-(p-phenylenedioxy)diphthalic anhydride, and
3,3'-(p-phenylenedioxy)diphthalic anhydride.

The ether-free tetracarboxylic acid dianhydrides of Formula (X), which are optional, may be defined in that $R^2$ is a tetravalent radical, for example, a radical derived from or containing an aromatic group containing at least 6 carbon atoms characterized by benzenoid unsaturation, wherein each of the 4 carbonyl groups of the dianhydride are attached to a separate carbon atom in the tetravalent radical, the carbonyl groups being in pairs in which the groups in each pair are attached to adjacent carbon atoms of the $R^2$ radical or to carbon atoms in the $R^2$ radical at most one carbon atom removed, to provide a 5-membered or a 6-membered ring as follows:

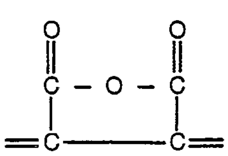 , 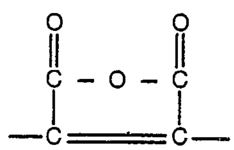 , or 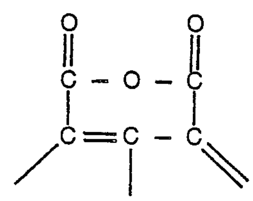 .

Illustrations of dianhydrides suitable for use in the present invention (with their reference designation in parenthesis) include:
2,3,6,7-naphthalene tetracarboxylic dianhydride;
3,3',4,4'-diphenyl tetracarboxylic dianhydride;
1,2,5,6-naphthalene tetracarboxylic dianhydride;
2,2'-3,3'-diphenyl tetracarboxylic dianhydride;
bis(3,4-dicarboxyphenyl)sulphone dianhydride;
benzophenone tetracarboxylic acid dianhydride (BTDA);
perylene-1,2,7,8-tetracarboxylic acid dianhydride;
bis(3,4-dicarboxyphenyl)methane dianhydride,

and cycloaliphatic and aliphatic anhydrides such as cyclopentane tetracarboxylic dianhydride, cyclohexane tetracarboxylic dianhydride, butane tetracarboxylic dianhydride, and the like.

The amines of the general formula (I) are an excellent source for making a group of functional containing silicones which can be incorporated into other copolymer materials having many commercial applications such as polishes, polyamines, polyimides, urethanes, and the like.

In the silicones of general formula (XIII) the functional atom or group F may include primary amino, secondary amino, tertiary amino, a carboalkoxy group, a formyl group, a nitro group, a keto group, a hydroxy group, nitrilo, amido, carboxy, a mercapto, a halogen, dialkyl phosphino, diaryl phosphino, and the like.

Chemical intermediates of the general formula (XIII) as hereinbefore defined are suitable for making copolymers of silicones with other organic chemicals, curing catalysts for epoxies, urethane and the like.

The following examples are illustrative of silicones of the general formula (XIII):

Example III
Functional Monoalkoxy Silane and Disiloxane Derived Therefrom

The process of Example I was again practised except that 67.1 parts of p-formylphenol was substituted for the p-aminophenol and 91.57 parts of chloropropyldimethylmethoxysilane was substituted for the bis-(chlorobutyl)tetramethyldisiloxane. The end product was recovered at a temperature within a range of from 215°C to 230°C at from about 0.13 to 0.67 mbar (0.1 mm to 0.5 mm of mercury). The recovered end product was a colourless liquid and was identified as p-formylphenoxypropyldimethylmethoxysilane. Its purity, as determined by GC, was 99%. The product yield was 60%.

The end product was then added to a large excess of methanol containing 100% excess of water sufficient to convert all the alkoxysilane to the disiloxane. A pellet of KOH was also added to the reaction as a catalyst to facilitate the reaction. The reaction was carried out overnight at room temperature while being constantly stirred. The methanol excess water was removed by distillation, and the disiloxane was recovered by a molecular distillation. The chemical structure of the product recovered was confirmed by I.R. and N.M.R. as 1,3-bis-(p-formylphenoxypropyl)tetramethyldisiloxane.

Example IV
Functional Secondary Amino Silane and Disiloxane Derived Therefrom

The process of Example III was practised except that 67.65 parts of m-(N-methylamino)phenol was substituted for the p-formylphenol. The end product was recovered at a temperature within a range of from 170°C to 175°C at a pressure of from about 0.13 to 0.67 mbar (0.1 mm to 0.5 mm of mercury). The recovered end product was a very pale yellow liquid identified as m-(N-methylamino) phenoxypropyldimethylmethoxysilane. The silane product was hydrolyzed to 1,3-bis-(N-methylaminophenoxypropyl)tetramethyldisiloxane in the same manner described in Example III.

Example V
Functional Ester Silane and Disiloxane Derived Therefrom

The process of Example III was practised except that 83.6 parts of p-carbomethoxyphenol was substituted for the p-formylphenol. The end product was recovered at a temperature within a range of from 185°C to 200°C at a pressure of from 0.67 to 2.67 mbar (0.5 mm to 2.0 mm of mercury). The recovered end product was a colourless liquid identified as p-carbomethoxyphenoxypropyldimethylmethoxysilane. The silane product was hydrolyzed to 1,3-bis(p-carbomethoxyphenoxypropyl) tetramethyldisiloxane in the same manner as described in Example III.

In a similar manner and by employing the process of Example III and using equivalent parts of the appropriate materials, the following functional aromatic silanes, as defined by their chemical structures, can be made and the corresponding disiloxanes made therefrom employing the hydrolysis process of Example III:

(XIV)

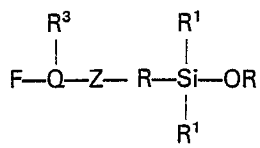

wherein F, Q, Z, R, $R^1$, and $R^3$ are as defined heretofore.

Specifically, when R is in an alkylene radical of three or four carbon atoms, $R^3$ is hydrogen and F may be as defined heretofore and may specifically be one selected from the following:

$-CN$, $-CHO$, $-R'_2N$, $-R'NH$ 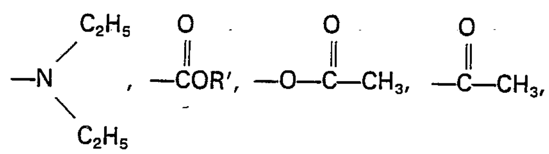

$-S-CH_3$, $-NO_2$, $-Cl$, and $-OH$ and R′ is as defined heretofore.

The substitution of functional groups or atoms may be ortho, meta or para to the oxygen (ether) group.

## Claims

1. A process for making a silicone compound having the general formula

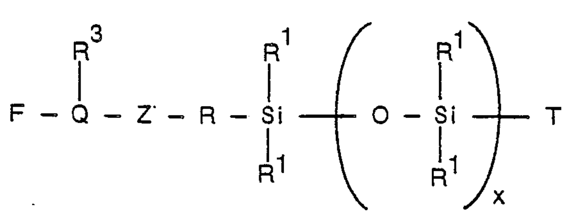 (XIII)

wherein Q is an aromatic nucleus, Z is —S—,

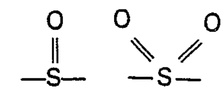

or —O—, R is a bivalent group, each $R^1$ is chosen from monovalent hydrocarbon radicals and any one $R^1$ may be the same as or different from another $R^1$, $R^3$ is hydrogen or a hydrocarbon radical or a functional group or atom, x is 0 or an integer of 1 or more, F is a functional group or atom, with the proviso that neither F nor $R^3$ is primary amino when Z is other than —O—, and T is a group chosen from alkoxy, aryloxy or other substituted or unsubstituted oxyhydrocarbyl radical and a group having the general formula

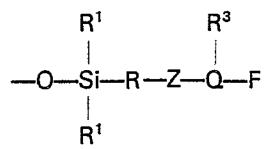

wherein Q, Z, R, $R^1$, $R^3$ and F are as defined above and any one R may be the same as or different from the other R and one $R^3$ may be different from the other $R^3$ comprising the steps of

(a) preparing an anhydrous solution in a dipolar aprotic organic solvent of an alkaline salt of a compound having the general formula

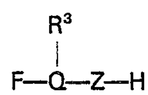

where F, Q, $R^3$ and Z have the meanings given above.

(b) at a temperature within a predetermined temperature range adding a compound having the general formula

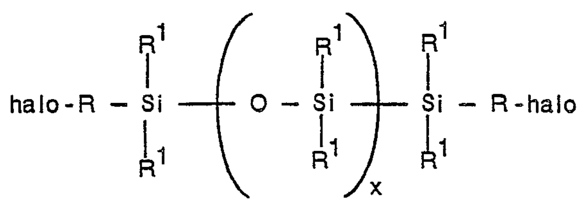

or the general formula

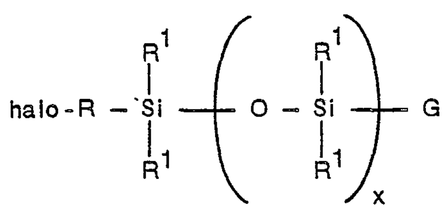

wherein halo denotes chlorine or bromine, G denotes alkoxy or aryloxy or other substituted or unsubstituted oxyhydrocarbyl radical, and the other symbols are as defined above, while maintaining the temperature within the predetermined range, and

(c) recovering the silicone compound.

2. A process according to claim 1 wherein the solvent comprises a mixture of toluene and dimethylsulphoxide.

3. A process according to any preceding claim wherein step (a) is performed by mixing the said compound $FQR^3ZH$ and an aqueous alkaline organic solvent mixture containing a dipolar aprotic solvent, bringing the resultant mixture to reflux temperature, maintaining it at that temperature whilst constantly agitating the reaction mixture and removing the water.

4. A process according to claim 3 wherein the aqueous alkali is aqueous sodium hydroxide or other alkali metal hydroxide.

5. A process according to any preceding claim wherein F is primary amino and Z is —O—.

6. A process according to any preceding claim, wherein the compound specified in step (b) is chosen

from an alkoxy dimethylhalopropylsilane, an alkoxy dimethylhalobutyl silane, a 1,3-bis(halopropyl)tetramethyldisiloxane and a 1,3-bis(halobutyl)tetramethyldisiloxane.

**Patentansprüche**

1. Ein Verfahren zur Herstellung einer Silikonverbindung der allgemeinen Formel

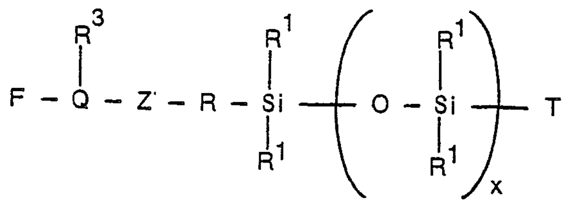

(XIII),

worin Q ein aromatischer Kern ist, Z für —S—,

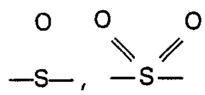

oder —O— steht, R eine zweiwertige Gruppe darstellt, jedes $R^1$ aus einwertigen Kohlenwasserstoffresten gewählt wird und gleich oder verschieden von anderen $R^1$ sein kann, $R^3$ Wasserstoff, einen Kohlenwasserstoffrest oder eine funktionelle Gruppe oder ein funktionelles Atom bedeutet, x für O oder eine ganze Zahl von 1 oder mehr steht, F eine funktionelle Gruppe oder ein funktionelles Atom darstellt, mit der Maßgabe, daß weder F noch $R^3$ primäres Amino bedeuten, wenn Z nicht für —O— steht, und T eine Gruppe bedeutet, die aus Alkoxy, Aryloxy oder einem anderen, gegebenenfalls substituierten Oxyhydrocarbylrest, und einer Gruppe der allgemeinen Formel

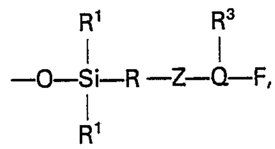

worin Q, Z, R, $R^1$, $R^3$ und F wie vorstehend definiert sind, alle R gleich oder verschieden sein können und alle $R^3$ ebenfalls gleich oder verschieden sein können, gewählt ist, umfassend Schritte

(a) Herstellung einer wasserfreien Lösung eines alkalischen Salzes einer Verbindung der allgemeinen Formel

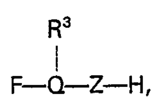

worin F, Q, $R^3$ und Z die vorstehend angeführte Bedeutung besitzen, in einem dipolaren, aprotischen, organischen Lösungsmittel;

(b) Zugabe einer Verbindung der allgemeinen Formel

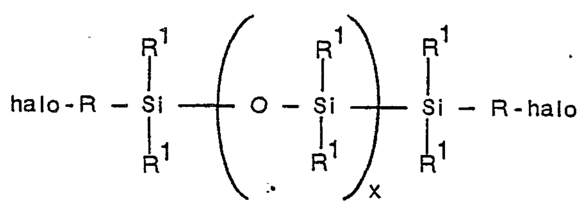

oder der allgemeinen Formel

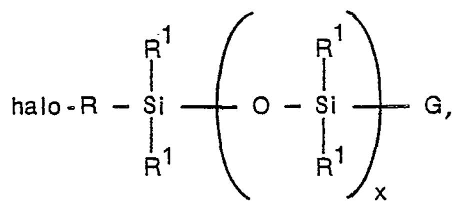

worin Halo für Chlor oder Brom steht, G Alkoxy oder Aryloxy oder einen anderen, gegebenenfalls

substituierten Oxyhydrocarbylrest darstellt und die anderen Symbole die oben angeführte Bedeutung besitzen, bei einer Temperatur innerhalb eines vorgebenen Temperaturbereiches unter Aufrechterhaltung der Temperatur innerhalb des vorgegebenen Bereiches und

(c) Gewinnung der Silikonverbindung.

2. Ein Verfahren nach Anspruch 1, worin das Lösungsmittel eine Mischung aus Toluol und Dimethylsulfoxid umfaßt.

3. Ein Verfahren nach einem der vorhergehenden Ansprüche, worin Schritt (a) durchgeführt wird, indem die genannte Verbindung $FQR^3ZH$ und ein wässeriges, alkalisches, organisches Lösungsmittelgemisch, das ein dipolares, aprotisches Lösungsmittel enthält, vermischt werden, die entstandene Mischung auf Rückflußtemperatur gebracht wird und auf dieser Temperatur gehalten wird, während das Reaktionsgemisch konstant gerührt und das Wasser entfernt wird.

4. Ein Verfahren nach Anspruch 3, worin das wässerige Alkali wässeriges Natriumhydroxid oder ein anderes Alkalimetallhydroxid ist.

5. Ein Verfahren nach einem der vorhergehenden Ansprüche, worin F primäres Amino ist und Z für —O-steht.

6. Ein Verfahren nach einem der vorhergehenden Ansprüche, worin die in Schritt (b) angeführte Verbindung unter einem Alkoxydimethylhalopropylsilan, einem Alkoxydimethylhalobutylsilan, einem 1,3-bis-(Halopropyl)tetramethyldisiloxan und einem 1,3-bis(Halobutyl)tetramethyldisiloxan gewählt wird.

**Revendications**

1. Procédé pour la préparation d'un composé de silicone ayant la formule générale

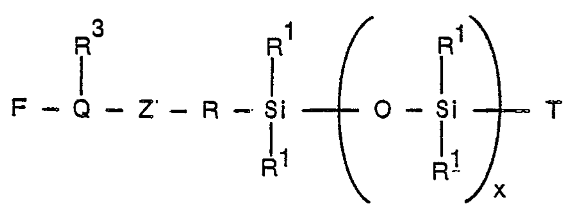

(XIII)

où Q est un noyau aromatique, Z est —S—,

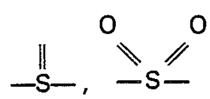

ou —O—, R est un groupe bivalent, chaque $R^1$ est choisi parmi des radicaux hydrocarbures monovalents et tout $R^1$ peut être identique ou différent d'un autre $R^1$, $R^3$ est de l'hydrogène ou un radical hydrocarbure ou un groupe fonctionnel ou atome, x est O ou un nombre entier de 1 ou plus, F est un groupe fonctionnel ou atome, à condition que ni F ni $R^3$ ne soit amino primaire lorsque Z est autre que —O— et T est un groupe choisi parmi alcoxy, aryloxy ou autre radical oxyhydroxycarbyle substitué ou non substitué et un groupe ayant la formule générale

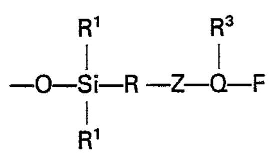

où Q, Z, R, $R^1$, $R^3$ et F sont tels que définis ci-dessus et tout R peut être identique ou différent d'un autre R et un $R^3$ peut être différent de l'autre $R^3$ comprenant les étapes de:

(a) préparer une solution anhydre dans un solvant dipolaire aprotique organique d'un sel alcalin d'un composé ayant la formule générale

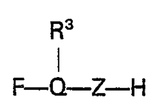

où F, Q, $R^3$ et Z ont les significations, données ci-dessus.

(b) à une température dans une gamme prédéterminée de températures, ajouter un composé ayant la formule générale

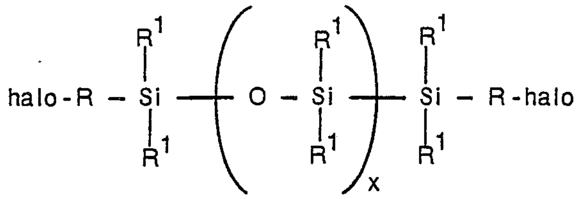

ou la formule générale

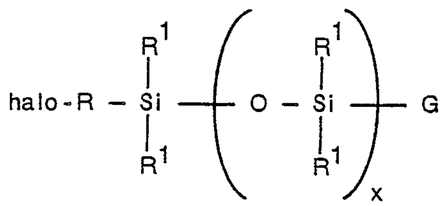

où halo désigne chlore ou brome, G désigne alcoxy ou aryloxy ou autre radical oxyhydrocarbyle substitué ou non substitué et les autres symboles sont tels que définis ci-dessus, tout en maintenant la température dans la gamme prédéterminée, et

(c) récupérer le composé de silicone.

2. Procédé selon la revendication 1 où le solvant comprend un mélange de toluène et de diméthylsulfoxyde.

3. Procédé selon l'une des revendications précédentes où l'étape (a) est accomplie en mélangeant ledit composé $FQR^3ZH$ et un mélange d'un solvant organique alcalin aqueux contenant un solvant aprotique dipolaire, en amenant le mélange résultant à la température de reflux, en le maintenant à cette température tout en agitant constamment le mélange réactionnel et en retirant l'eau.

4. Procédé selon la revendication 3, où l'alcali aqueux est de la soude aqueuse ou autre hydroxyde d'un métal alcalin.

5. Procédé selon l'une des revendications précédentes où F est amino primaire et Z est —O—.

6. Procédé selon l'une des revendications précédentes, où le composé spécifié à l'étape (b) est choisi parmi un alcoxy diméthylhalopropylsilane, un alcoxy diméthylhalobutyl silane, un 1,3-bis(halopropyl)tétraméthyldisiloxane et un 1,3-bis(halobutyl)tétraméthyldisiloxane.